# EUROPÄISCHE PATENTSCHRIFT

(11) **EP 2 125 473 B1**
(45) Veröffentlichungstag und Bekanntmachung des Hinweises auf die Patenterteilung: **28.02.2018**
(21) Anmeldenummer: 08717419.9
(22) Anmeldetag: 05.03.2008
(51) Int. Cl.: B60W 30/18

(54) **VERFAHREN ZUM BETREIBEN EINES AUTOMATGETRIEBES**
METHOD FOR OPERATING AN AUTOMATIC TRANSMISSION
PROCÉDÉ PERMETTANT DE FAIRE FONCTIONNER UNE BOÎTE DE VITESSES AUTOMATIQUE

(30) Priorität: 17.03.2007 DE 102007012875
(43) Veröffentlichungstag der Anmeldung: 02.12.2009
(73) Patentinhaber: ZF Friedrichshafen AG, 88046 Friedrichshafen (DE)
(72) Erfinder: SCHNEIDER, Florian, 88161 Lindenberg (DE); MAIR, Roland, 88069 Tettnang (DE)
(86) Internationale Anmeldenummer: PCT/EP2008/052669
(87) Internationale Veröffentlichungsnummer: WO 2008/113688

(56) Entgegenhaltungen:
- EP-A- 0 242 127
- DE-A1- 10 334 930
- DE-A1- 19 532 946
- DE-A1- 19 823 764
- DE-A1-102005 003 608

## Beschreibung

Die Erfindung betrifft ein Verfahren zum Betreiben eines Automatgetriebes nach dem Oberbegriff des Anspruchs 1.

Fahrzeuge benötigen Getriebe, um Drehmomente und Drehzahlen zu wandeln. Aufgabe eines Getriebes ist es, das Zugkraftangebot eines Antriebsaggregats umzusetzen. Die hier vorliegende Erfindung betrifft ein Verfahren zum Betreiben eines Automatgetriebes.

Im Sinne der hier vorliegenden Erfindung sollen unter dem Begriff Automatgetriebe alle synchronisierten Getriebe sowie alle unsynchronisierten Getriebe mit einem automatisierten Gangwechsel oder einem automatischen Gangwechsel verstanden werden. Bei einem Automatgetriebe mit einem automatisierten Gangwechsel erfolgt der Gangwechsel in der Regel mit Zugkraftunterbrechung. Bei einem Automatgetriebe mit einem automatischen Gangwechsel erfolgt der Gangwechsel hingegen ohne Zugkraftunterbrechung. Zu den Getrieben mit einem automatisierten Gangwechsel gehören zum Beispiel das automatisierte Klauengetriebe oder das automatisierte Synchrongetriebe. Zu den Getrieben mit einem automatischen Gangwechsel gehört zum Beispiel das konventionelle, vollautomatische Schaltgetriebe.

Weiterhin sollen unter dem Begriff Automatgetriebe auch Getriebe verstanden werden können, die mehrere Getriebeteile aufweisen. Solche Getriebe mit mehreren Getriebeteilen werden auch als Gruppengetriebe bezeichnet, wobei entweder jedes Getriebeteil eines Gruppengetriebes synchronisiert oder jedes Getriebeteil eines Gruppengetriebes unsynchronisiert oder auch mindestens ein Getriebeteil eines Gruppengetriebes synchronisiert sowie das oder jedes andere Getriebeteil des Gruppengetriebes unsynchronisiert ausgebildet sein kann.

Bei aus der Praxis bekannten Automatgetrieben wird abhängig von der Betätigung eines Gaspedals des Kraftfahrzeugs eine Schaltstrategie bestimmt und demnach ein Gang für das Automatgetriebe gewählt. Dann, wenn das Kraftfahrzeug bei unbetätigtem Gaspedal rollt bzw. ausrollt, werden bei einer ersten Gruppe von aus der Praxis bekannten Automatgetrieben Schubrückschaltungen ausgeführt. Derartige Schubrückschaltungen führen dazu, dass während des Rollens bzw. Ausrollens kontinuierlich Gänge gewechselt werden, was jedoch für den Fahrer des Kraftfahrzeugs als Änderung in der Verzögerung spürbar ist, da der Verbrennungsmotor nach jeder Schubrückschaltung einen relativ weiten Drehzahlbereich durchläuft und dessen Schubmoment von der Drehzahl abhängt. Sich stark ändernde Verzögerungen des Kraftfahrzeugs infolge solcher Schubrückschaltungen sowie die hierdurch bedingte Geräuschentwicklung werden als unkomfortabel empfunden.

Zur Vermeidung der obigen Nachteile sind aus der Praxis weiterhin Automatgetriebe bekannt, die beim Rollen bzw. Ausrollen des Kraftfahrzeugs auf Schubrückschaltungen verzichten. Bei dieser zweiten Gruppe von Automatgetrieben verbleibt das Automatgetriebe beim Rollen sowie bei einer geschlossener Anfahrkupplung in dem Gang, in welchem das Kraftfahrzeug zuvor bei betätigtem Gaspedal gefahren ist. Dabei wird fortlaufend überwacht, ob die Getriebeeingangsdrehzahl einen Grenzwert in der Nähe der Leerlaufdrehzahl des Verbrennungsmotors unterschreitet, wobei dann, wenn dieser Grenzwert unterschritten wird, die Anfahrkupplung geöffnet wird, um ein Schieben bzw. Drücken des Verbrennungsmotors zu vermeiden. Das Automatgetriebe verbleibt bei geöffneter Anfahrkupplung im ursprünglichen Gang, wodurch jedoch die ungewünschte Situation eintreten kann, dass beim nachfolgenden Schließen der Anfahrkupplung, z. B. infolge einer Betätigung des Gaspedals, ein zur Fahrzeuggeschwindigkeit unpassender Gang im Automatgetriebe gewählt ist. Dann müssen zuerst im Automatgetriebe Rückschaltungen ausgeführt werden, um dem durch die Betätigung des Gaspedals geäußerten Wunsch nach Beschleunigung gerecht werden zu können.

Derartige Rückschaltungen nehmen jedoch einige Zeit in Anspruch, so dass eine Reaktion auf die Betätigung des Gaspedals erst mit einer gewissen Verzögerung erfolgen kann. Diese fehlende Spontaneität wird ebenfalls als nachteilig empfunden. Die DE 103 34 930 A1 offenbart ein Verfahren mit allen Merkmalen des Oberbegriffs des Anspruchs 1.

Die DE 10 2004 038 520 A1 offenbart ein Verfahren zum Betreiben eines Automatgetriebes, wobei nach diesem Stand der Technik beim Rollen bzw. Ausrollen eines Kraftfahrzeugs Rückschaltungen unter Vermeidung von Lastwechseln während einer Rückschaltung ausgeführt werden.

Hiervon ausgehend liegt der vorliegenden Erfindung das Problem zu Grunde, ein neuartiges Verfahren zum Betreiben eines Automatgetriebes zu schaffen, mit welchem die obigen Nachteile vermieden werden können.

Dieses Problem wird durch ein Verfahren zum Betreiben eines Automatgetriebes gemäß Anspruch 1 gelöst. Erfindungsgemäß wird beim Rollen mit geöffneter Anfahrkupplung im Automatgetriebe ein zur aktuellen Geschwindigkeit passender Gang geschaltet, um bei einem nachfolgenden Schließen der Anfahrkupplung einen an die beim Schließen der Anfahrkupplung herrschende Geschwindigkeit des Kraftfahrzeugs passenden Gang bereitzustellen.

Mit dem erfindungsgemäßen Verfahren zum Betreiben eines Automatgetriebes wird auf Schubrückschaltungen beim Rollen bzw. Ausrollen eines Kraftfahrzeugs verzichtet. Mit dem erfindungsgemäßen Verfahren kann gewährleistet werden, dass dann, wenn nach dem Öffnen der Anfahrkupplung beim Ausrollen nachfolgend die Anfahrkupplung wieder geschlossen wird, das Automatgetriebe einen zur Geschwindigkeit des Kraftfahrzeugs passenden Gang geschaltet hat. Nach dem Schalten der Anfahrkupplung müssen demnach keine Rückschaltungen ausgeführt werden, so dass nachfolgend mit hoher Spontaneität auf einen Fahrerwunsch reagiert werden kann.

Das erfindungsgemäße Verfahren vermeidet demnach sämtliche Nachteile des Standes der Technik, also sowohl durch Schubrückschaltungen bedingte Verzögerungen als auch eine fehlende Spontaneität.

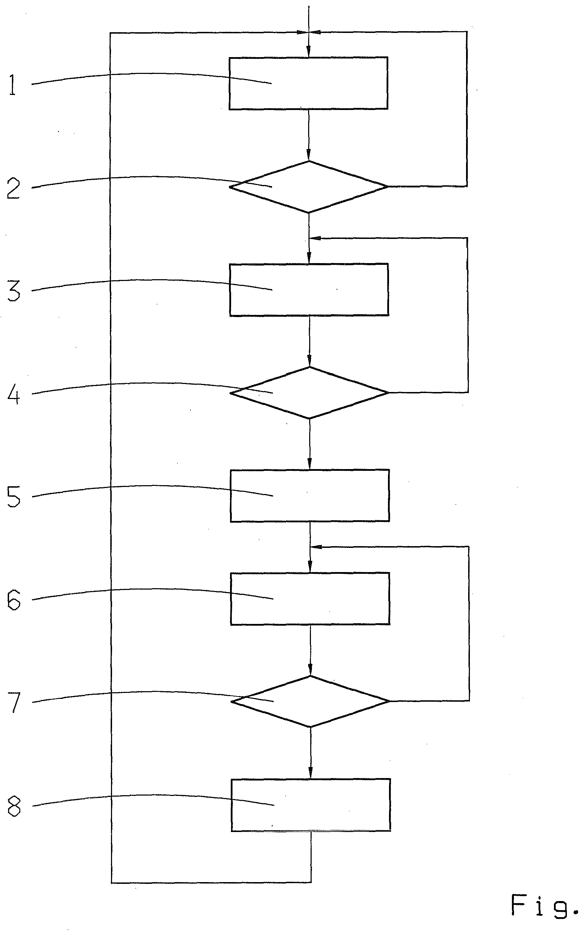

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert.

Die einzige Figur zeigt ein schematisiertes Signalflussdiagramm zur Verdeutlichung des erfindungsgemäßen Verfahrens zum Betreiben eines Automatgetriebes.

Die hier vorliegende Erfindung betrifft ein Verfahren zum Betreiben eines Automatgetriebes eines Kraftfahrzeugs, wobei das erfindungsgemäße Verfahren nachfolgend unter Bezugnahme auf die Figur im Detail beschrieben wird.

Der Block 1 im Signalflussdiagramm der Figur visualisiert einen Betriebsmodus eines Automatgetriebes eines Kraftfahrzeugs, in welchem das Automatgetriebe insbesondere auf Basis der Betätigung eines Gaspedals auf Grundlage einer in einem Getriebesteuergerät des Automatgetriebes implementierten Schaltstrategie Gänge automatisiert oder automatisch schaltet.

Bei unveränderter Gaspedalbetätigung und einer Fahrt auf einer Ebene wählt das Automatgetriebe automatisiert bzw. automatisch einen Gang, der zur gewünschten Gaspedalbetätigung passt. Bei einem solchen Fahren des Kraftfahrzeugs ist eine sogenannte Anfahrkupplung des Automatgetriebes selbstverständlich geschlossen.

Gemäß Block 2 des Signalflussdiagramms der Figur wird beim Fahren des Kraftfahrzeugs fortlaufend die Betätigung des Gaspedals überprüft. Wird hierbei in Block 2 festgestellt, dass das Gaspedal betätigt ist, so wird ausgehend von Block 2 auf Block 1 zurückverzweigt. Wird hingegen in Block 2 festgestellt, dass das Gaspedal nicht betätigt ist, dass also das Kraftfahrzeug rollt bzw. ausrollt, so wird ausgehend von Block 2 auf Block 3 verzweigt.

Beim Ausrollen des Kraftfahrzeugs wird gemäß Block 3 das Automatgetriebe zunächst derart betrieben, dass unter Verzicht auf Schubrückschaltungen das Automatgetriebe bei geschlossener Anfahrkupplung den Gang beibehält bzw. in dem Gang verbleibt, in welchem das Kraftfahrzeug im Betriebsmodus gemäß Block 1 gefahren ist. Zunächst wird demnach nach Loslassen eines Gaspedals im Sinne von Block 3 bei geschlossener Anfahrkupplung der zuvor eingelegte Gang des Automatgetriebes beibehalten.

In einem Block 4 wird laufend beim derartigen Ausrollen des Kraftfahrzeugs die Getriebeeingangsdrehzahl des Automatgetriebes überwacht und mit einem Grenzwert verglichen, der vorzugsweise in der Nähe der Leerlaufdrehzahl eines mit dem Automatgetriebe gekoppelten Antriebs liegt. Wird hierbei festgestellt, dass die Getriebeeingangsdrehzahl des Automatgetriebes oberhalb des Grenzwerts liegt, so wird ausgehend von Block 4 auf Block 3 zurückverzweigt. Wird hingegen in Block 4 festgestellt, dass die Getriebeeingangsdrehzahl des Automatgetriebes diesen Grenzwert erreicht oder gar unterschreitet, so wird ausgehend von Block 4 auf Block 5 verzweigt.

In Block 5 des erfindungsgemäßen Verfahrens wird bei Erreichen oder Unterschreiten des Grenzwerts für die Getriebeeingangsdrehzahl die Anfahrkupplung des Automatgetriebes geöffnet, um so ein Schieben bzw. Drücken und damit Abwürgen des Antriebs zu vermeiden.

Darauffolgend wird erfindungsgemäß in einem Block 6 beim Rollen bzw. Ausrollen mit geöffneter Anfahrkupplung im Automatgetriebe ein zur aktuellen Geschwindigkeit des Kraftfahrzeugs passender Gang geschaltet, um bei einem nachfolgenden Schließen der Anfahrkupplung einen an die beim Schließen der Anfahrkupplung herrschende Geschwindigkeit des Kraftfahrzeugs passenden Gang bereitzustellen. Mit dem obigen Verfahren ist gewährleistet, dass eine Rückschaltung, die bei geöffneter Anfahrkupplung ausgeführt wird, keine Auswirkung auf die Verzögerung des Kraftfahrzeugs hat. Weiterhin ist, da stets ein zur Geschwindigkeit des Kraftfahrzeugs passender Gang geschaltet wird, eine geforderte Spontaneität gewährleistet. Da die Anfahrkupplung mit Abschluss einer Schaltung in Block 6 nicht geschlossen wird, stellt sich keine Drehzahlveränderung des Antriebs aufgrund der Schaltung ein. In Block 6 kann eine einzige Rückschaltung oder auch mehrere Rückschaltungen ausgeführt werden, um stets einen zur Geschwindigkeit des Kraftfahrzeugs optimalen Gang zu wählen. In Block 6 bleibt demnach die Anfahrkupplung des Automatgetriebes stets geöffnet.

In einem Block 7 wird überprüft, ob ein Ereignis vorliegt, welches ein Schließen der Anfahrkupplung erfordert. Wird in Block 7 festgestellt, dass kein derartiges Ereignis vorliegt, so wird von Block 7 auf Block 6 zurückverzweigt. Wird hingegen in Block 7 festgestellt, dass ein Ereignis vorliegt, das ein Schließen der Anfahrkupplung erfordert, so wird ausgehend von Block 7 auf Block 8 verzweigt, wobei gemäß Block 8 die Anfahrkupplung geschlossen wird.

Für Block 7 existieren eine Vielzahl von Ereignissen, in welchen der Zustand der geöffneten Anfahrkupplung beim Ausrollen des Kraftfahrzeugs verlassen und demnach die Anfahrkupplung geschlossen werden muss. So muss dann, wenn in Block 7 festgestellt wird, dass das Gaspedal betätigt wird, also ein Beschleunigungswunsch des Fahrers vorliegt, die Anfahrkupplung geschlossen werden.

In diesem Fall wird zum Schließen der Anfahrkupplung der Gang beibehalten, der in Block 6 angepasst an die Geschwindigkeit des Kraftfahrzeugs gewählt wurde.

Wird in Block 7 festgestellt, dass ein Bremspedal des Kraftfahrzeugs betätigt wird, also ein Verzögerungswunsch vorliegt, so wird auf Block 8 verzweigt und die Anfahrkupplung geschlossen. In diesem Fall wird die Anfahrkupplung geschlossen, um das Verzögerungsmoment des Antriebs auszunutzen, sofern die Getriebeeingangsdrehzahl über der Leerlaufdrehzahl des Antriebs liegt.

Wird in Block 7 festgestellt, dass der Antrieb beim Rollen bzw. Ausrollen ausgegangen ist, so wird ausgehend von Block 7 ebenfalls auf Block 8 verzweigt und die Anfahrkupplung geschlossen, so dass der Antrieb mitgeschleppt wird. Dies ist eventuell notwendig, um eine Lenkhilfeeinrichtung des Kraftfahrzeugs korrekt betreiben zu können und so die Sicherheit des Kraftfahrzeugs zu gewährleisten. Weiterhin kann durch dieses Mitschleppen des Antriebs die Funktion weiterer motorseitiger Nebenaggregate, wie z. B. eines Kompressors, eines Klimageräts, sichergestellt werden.

Bei einem weiteren in Block 7 zu überwachenden Ereignis, bei dessen Vorliegen auf Block 8 verzweigt und die Anfahrkupplung geschlossen wird, handelt es sich um einen Zustand, bei welchem das Kraftfahrzeug beim Ausrollen bzw. Rollen mit geöffneter Anfahrkupplung ohne Beschleunigungswunsch schneller wird. Auch bei diesem Ereignis muss der Zustand der geöffneten Anfahrkupplung verlassen werden, wobei dies in Block 8 auf unterschiedliche Art und Weise erfolgen kann. So kann nach einer ersten Alternative die Anfahrkupplung dann geschlossen werden, wenn die Getriebeeingangsdrehzahl im aktuellen Gang, der zuletzt vor dem Beschleunigen des Kraftfahrzeugs eingelegt wurde, einen gewissen Wert bzw. die Geschwindigkeit des Kraftfahrzeugs eine von diesem Gang abhängige Geschwindigkeit überschreitet, wobei dann mit diesem aktuellen Gang die Anfahrkupplung geschlossen wird.

Nach einer zweiten Alternative kann vorgesehen werden, dass dann, wenn das Kraftfahrzeug beschleunigt, bei geöffneter Anfahrkupplung noch Hochschaltungen ausgeführt werden, wobei dann jedoch maximal bis zu dem Gang hochgeschaltet wird, der vor dem Öffnen der Anfahrkupplung in den Blöcken 3, 4 und 5 eingelegt war. Ist dieser Gang erreicht und überschreitet die Getriebeeingangsdrehzahl einen gewissen Wert, wird die Anfahrkupplung geschlossen. Nach einer dritten Alternative ist es auch möglich, in einen Zwischengang zwischen dem aktuellen Gang und dem Gang, der vor dem Öffnen der Anfahrkupplung eingelegt war, hochzuschalten und in diesem Zwischengang die Anfahrkupplung zu schließen.

Das oben beschriebene Verfahren findet insbesondere bei synchronisierten Automatgetrieben Verwendung, bei welchen automatisierte Gangwechsel mit Zugkraftunterbrechung oder automatische Gangwechsel ohne Zugkraftunterbrechung durchgeführt werden. Ebenso kann das obige Verfahren bei sogenannten Gruppengetrieben zum Einsatz kommen, bei welchen jedes Getriebeteil des Gruppengetriebes synchronisiert ist. Jeder synchronisierte Getriebeteil wird dann nach dem obigen Verfahren betrieben.

Ebenso ist es möglich, dass erfindungsgemäße Verfahren bei unsynchronisierten Getrieben oder Gruppengetrieben mit mindestens einem unsynchronisierten Getriebeteil zu verwenden, wobei dann für das unsynchronisierte Automatgetriebe bzw. den oder jeden unsynchronisierten Getriebeteil des Gruppengetriebes eine Drehzahlanpassung bzw. Drehzahlangleichung über einen Motoreingriff durchgeführt wird. Nachfolgend werden Maßnahmen dargestellt, mit welchen ein derartiger Motoreingriff zur Drehzahlanpassung bzw. Drehzahlangleichung unter Minimierung von als störend empfundenen Motorgeräuschen durchgeführt werden kann.

Nach einer ersten Variante kann die Drehzahlanpassung derart durchgeführt werden, dass die Drehzahl des Antriebs bzw. Motors langsam, nämlich kontinuierlich bzw. quasikontinuierlich, nachgeführt wird, so dass keine akustischen Störungen durch plötzliche, schnelle Drehzahlanpassungen bzw. Gasausstöße auftritt. Dadurch können im unsynchronisierten Automatgetriebe bzw. in unsynchronisierten Getriebeteilen eines Gruppengetriebes Gänge nachgeführt werden. Zumindest zum Zeitpunkt des Einlegens des neuen Gangs im unsynchronisierten Automatgetriebe oder im unsynchronisierten Getriebeteil des Gruppengetriebes wird das unsynchronisierte Automatgetriebe bzw. der unsynchronisierte Getriebeteil vom Antriebsstrang getrennt, und zwar entweder durch Öffnung der Anfahrkupplung oder durch Schalten eines anderen Getriebeteils eines Gruppengetriebes nach Neutral.

Eine weitere Möglichkeit zur Ausführung der Drehzahlanpassung über den Motoreingriff bei einem unsynchronisierten Automatgetriebe bzw. einem unsynchronisierten Getriebeteil eines Gruppengetriebes kann derart erfolgen, dass das unsynchronisierte Automatgetriebe bzw. der unsynchronisierte Getriebeteil nach Neutral geschaltet wird, um die Anpassschaltung am Ende einer Nachführphase vorzubereiten. Da der Antriebsstrang durch wenigstens ein Getriebeteil unterbrochen wird, kann die Anfahrkupplung ganz oder teilweise geschlossen werden. Dies ermöglicht eine Vorbereitung zur Drehzahlanpassung, die nachfolgend für die Anpassschaltung erfolgen muss. Damit muss zur Ausführung der Anpassschaltung nur noch der Antrieb auf Synchrondrehzahl gebracht und der Gang eingelegt werden. Das Gangeinlegen kann bei geschlossener, teilgeschlossener oder offener Anfahrkupplung erfolgen. In der Wartezeit bis zur Anpassschaltung kann zur Verkürzung der Schaltzeit bzw. zur Erhöhung der Spontaneität die Motordrehzahl permanent nachgeführt bzw. an die Zieldrehzahl angenähert werden. Ebenso ist es möglich, eine Wählaktuatorik in dem oder jedem unsynchronisierten Getriebeteil nachzuführen.

Bei Varianten von Automatgetrieben, die z. B. keine aktive Bremse besitzen oder die nach der Anfahrkupplung mit einem Motor, z. B. einem Elektromotor bei einem Hybridantrieb, verbunden sind, kann die Drehzahlangleichung ohne Komforteinbußen durch diesen Motor, z. B. den Elektromotor des Hybridantriebs, erfolgen, so dass Gänge kontinuierlich nachgeführt werden können.

### Bezugszeichen

- 1: Block
- 2: Block
- 3: Block
- 4: Block
- 5: Block
- 6: Block
- 7: Block
- 8: Block

## Patentansprüche

1. Verfahren zum Betreiben eines Automatgetriebes eines Kraftfahrzeugs, wobei dann, wenn das Kraftfahrzeug bei betätigtem Fahrpedal und geschlossener Anfahrkupplung fährt und anschließend bei unbetätigtem Fahrpedal und geschlossener Anfahrkupplung rollt, das Automatgetriebe beim Rollen mit geschlossener Anfahrkupplung in dem Gang verbleibt, in welchem dasselbe bei zuvor betätigten Gaspedal gefahren ist, und wobei dann, wenn beim Rollen die Getriebeeingangsdrehzahl des Automatgetriebes unter einen Grenzwert absinkt, die Anfahrkupplung geöffnet wird, wobei beim Rollen mit geöffneter Anfahrkupplung im Automatgetriebe ein zur aktuellen Geschwindigkeit des Kraftfahrzeugs passender Gang geschaltet wird, um bei einem nachfolgenden Schließen der Anfahrkupplung einen an die beim Schließen der Anfahrkupplung herrschende Geschwindigkeit des Kraftfahrzeugs passenden Gang bereitzustellen, dadurch **gekennzeic**h**net**, dass die Anfahrkupplung beim Rollen dann geschlossen wird, wenn ein Antrieb des Kraftfahrzeugs ausgeht.

## Claims

1. Method for operating an automatic transmission of a motor vehicle, wherein, when the motor vehicle is travelling with an accelerator pedal actuated and a launch clutch closed, and subsequently coasts with the accelerator pedal not actuated and the launch clutch closed, the automatic transmission, during the coasting with the launch clutch closed, remains in the gear ratio in which the automatic transmission was operated when the accelerator pedal was previously actuated, and wherein, during the coasting, when the transmission input rotational speed of the automatic transmission falls below a threshold value, the launch clutch is opened, wherein, during the coasting with the launch clutch open, a gear ratio suited to the present speed of the motor vehicle is engaged in the automatic transmission in order, upon a subsequent closure of the launch clutch, to provide a gear ratio which is suited to the speed of the motor vehicle prevailing upon the closure of the launch clutch, **characterized in that** the launch clutch is closed during the coasting when a drive of the motor vehicle stalls.

## Revendications

1. Procédé pour faire fonctionner une boîte de vitesses automatique d'un véhicule automobile, dans lequel, lorsque le véhicule automobile se déplace avec la pédale d'accélération actionnée et l'embrayage de démarrage fermé et roule ensuite avec la pédale d'accélérateur non actionnée et l'embrayage de démarrage fermé, la boîte de vitesses automatique, lors du roulage avec l'embrayage de démarrage fermé, reste dans le rapport dans lequel elle a été amenée lorsque la pédale d'accélérateur a préalablement été actionnée, et lors du roulage, si la vitesse d'entrée de boîte de vitesses de la boîte de vitesses automatique descend en dessous d'une valeur limite, l'embrayage de démarrage est ouvert, et lors du roulage avec l'embrayage de démarrage ouvert, un rapport adapté à la vitesse actuelle du véhicule automobile est commuté dans la boîte de vitesses automatique, afin de fournir, lors de la fermeture subséquente de l'embrayage de démarrage, un rapport adapté à la vitesse du véhicule automobile existant lors de la fermeture de l'embrayage de démarrage, **caractérisé en ce que** l'embrayage de démarrage, lors du roulage, est ensuite fermé lorsqu'un entraînement du véhicule automobile se termine.
